# EUROPEAN PATENT APPLICATION

(11) **EP 4 621 886 A1**
(43) Date of publication of application: **24.09.2025**
(21) Application number: 23907841.3
(22) Date of filing: 21.12.2023
(51) Int. Cl.: H01M 4/66, C25D 1/04, B24C 1/10, B24C 7/00, H01M 10/04, H01M 10/0587, H01M 4/02

(54) **METHOD FOR MANUFACTURING ANODE CURRENT COLLECTOR, ANODE CURRENT COLLECTOR, AND ANODE, ELECTRODE ASSEMBLY, AND SECONDARY BATTERY COMPRISING ANODE CURRENT COLLECTOR**

(30) Priority: 22.12.2022 KR 20220182377
(71) Applicant: LG Energy Solution, Ltd., Seoul 07335 (KR)
(72) Inventor: JEONG, Yeon Beom, Daejeon 34122 (KR); KWON, Jung Geun, Daejeon 34122 (KR); PAENG, Ki Hoon, Daejeon 34122 (KR); MOON, Jae Won, Daejeon 34122 (KR)
(74) Representative: Hoffmann Eitle
(86) International application number: PCT/KR2023/021351
(87) International publication number: WO 2024/136558

(57) **Abstract**

A method for manufacturing a negative electrode current collector according to the present invention may include the steps of: (A) preparing an electrolytic copper foil; and (B) applying a compressive residual stress to both ends of the electrolytic copper foil in the MD direction.

## Description

### TECHNICAL FIELD

This application claims the benefit of Korean Patent Application No. 10-2022-0182377, filed on December 22, 2022, the disclosure of which is incorporated herein in its entirety by reference.

The present invention relates to a method for manufacturing a negative electrode current collector, a negative electrode current collector, a negative electrode including the same, an electrode assembly, and a secondary battery.

### BACKGROUND ART

Demand for batteries as an energy source has been significantly increased as technology development and demand with respect to electric vehicles, and energy storage systems (ESSs) have recently increased, and thus a variety of researches on batteries capable of meeting various needs have been carried out. Particularly, as a power source for such devices, researches on lithium secondary batteries having excellent life and cycle characteristics as well as high energy density have been actively conducted.

In general, a lithium secondary battery is classified into a cylindrical battery or a prismatic battery in which an electrode assembly is contained in a cylindrical or prismatic metal can, and a pouch-type battery in which an electrode assembly is contained in a pouch-type case of an aluminum laminate sheet, according to a shape of a battery case. The electrode assembly includes a positive electrode, a negative electrode, and a separator interposed between the positive electrode and the negative electrode, is a power generating element which may be charged and discharged, and is classified into a jelly-roll type in which the electrode assembly is wound with a separator interposed between the positive electrode and the negative electrode in a long sheet type coated with an active material, and a stacked type in which a plurality of positive electrodes and negative electrodes having a predetermined size are sequentially stacked with the separator interposed therebetween. The negative electrode may have a structure in which a negative electrode active material layer is stacked on one surface or both surfaces of a negative electrode current collector, and a foil made of a copper material (hereinafter, referred to as "copper foil") may be generally used as the negative electrode current collector.

Types of copper foil include a rolled copper foil manufactured through a rolling process and an electrolytic copper foil manufactured through an electrolytic plating process. The rolled copper foil has an advantage compared to the electrolytic copper foil in terms of physical properties by imparting processability to the metal through a rolling process, but has disadvantages in that the manufacturing cost is expensive and the quality uniformity with respect to the width is poor because a rolling is performed multiple times to manufacture a thin film. On the other hand, the electrolytic copper foil has the advantage that it is easy to manufacture a very thin copper foil at a thickness of 6 µm to 8 µm. However, with regard to the electrolytic copper foil, crystal grains are grown in an electrolytic deposition manner due to process characteristics, and thus a tensile residual stress may be formed on the surface of the copper foil. The tensile residual stress is a major cause of fatigue failure of metal. The fatigue failure means that the material is destroyed at a stress much lower than the tensile strength when a stress is repeatedly applied.

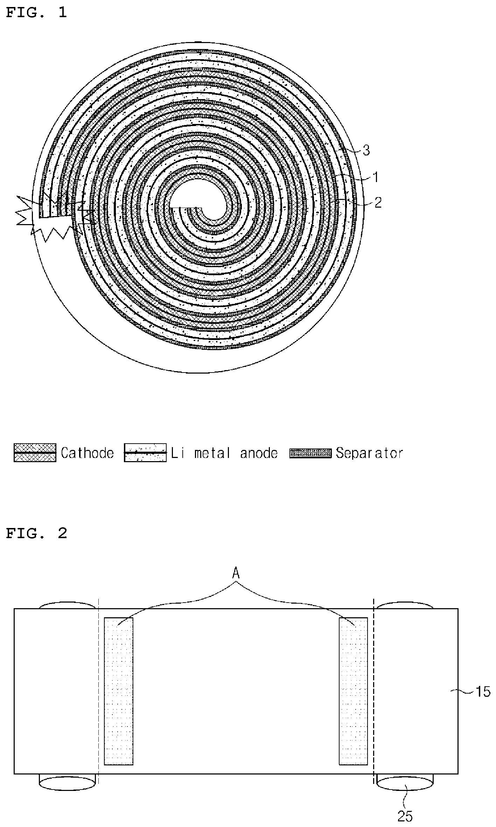

FIG. 1 is a view illustrating a position where fracture occurs in a conventional jelly-roll type electrode assembly.

Referring to FIG. 1, the conventional jelly-roll type electrode assembly includes a positive electrode 2, a negative electrode 3, and a separator 1 disposed between the positive electrode and the negative electrode. The negative electrode 3 includes a negative electrode current collector and a negative electrode active material layer on the negative electrode current collector, and a weak stress is continuously applied to the negative electrode current collector disposed at the outermost of the electrode assembly, that is, the end of the negative electrode current collector disposed on the side of the battery can that accommodates the electrode assembly due to the contraction and expansion of the electrode during the charging and discharging process of the battery, so that the tensile residual stress may be further concentrated. This acts as a factor that increases fatigue failure at a specific position, and thus there is a limitation in that fracture occurs at a stress much lower than the tensile strength of the negative electrode current collector, thereby deteriorating the lifetime characteristics of the battery.

Therefore, there is a need to develop technology for improving fatigue failure at the end of the negative electrode current collector.

### DISCLOSURE OF THE INVENTION

### TECHNICAL PROBLEM

To solve the above limitations, an aspect of the present invention provides a method for manufacturing a negative electrode current collector, a negative electrode current collector, a negative electrode including the same, an electrode assembly, and a secondary battery, the method capable of improving fatigue failure at the end of the negative electrode current collector disposed on the outermost of the electrode assembly.

### TECHNICAL SOLUTION

According to an aspect of the present invention, there is provided a method for manufacturing a negative electrode current collector, the method including: preparing an electrolytic copper foil; and applying a compressive residual stress to both ends of the electrolytic copper foil in the MD direction.

The applying of the compressive residual stress may be performed through sand blast.

The sand blast may be performed by blasting particles having a particle diameter of 30 µm or less.

The particles may include at least one among Al₂O₃, melamine, and amino aldehyde.

The sand blast may have a blasting distance of 20 mm to 100 mm.

The sand blast may have an air pressure of 0.10 MPa to 0.30 MPa.

The sand blast may have a nozzle transfer speed of 5 M/s to 10 M/s.

In the applying of the compressive residual stress, the tension of the electrolytic copper foil may be controlled by a transfer roll.

According to another aspect of the present invention, there is provided a negative electrode current collector including an electrolytic copper foil having plastic deformation layers formed at both ends thereof in the MD direction, and having an average residual stress of 0 MPa or less when a surface residual stress is measured.

When the surface residual stress of the negative electrode current collector is measured, the area in which the compressive residual stress is formed may be 70.0% to 99.5% of the total measured area.

When the surface residual stress of the negative electrode current collector is measured, the area in which the tensile residual stress is formed may be 0.5% to 10.0% of the total measured area.

The plastic deformation layer may have a compressive residual stress.

According to another aspect of the present invention, there is provided a negative electrode including the above-described negative electrode current collector.

According to another aspect of the present invention, there is provided an electrode assembly including the above-described negative electrode.

The plastic deformation layer may include the end of the negative electrode current collector disposed at the outermost of the electrode assembly.

According to another aspect of the present invention, there is provided a secondary battery including the above-described electrode assembly; a battery can that accommodates the electrode assembly; and a cap assembly that seals an upper opening of the battery can.

### ADVANTAGEOUS EFFECTS

According to the present invention, by selectively applying a compressive residual stress to a specific region in the surface of the electrolytic copper foil, the tensile residual stress concentrated on the end of the negative electrode current collector disposed on the outermost of the electrode assembly is offset, thereby suppressing the occurrence of fracture due to fatigue failure and achieving improved lifetime characteristics.

When the compressive residual stress is applied through the sand blast as in the present invention, the surface damage of the electrolytic copper foil is minimized, thereby improving the occurrence of fracture due to fatigue failure.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings. Meanwhile, the shape, size, scale, ratio, or the like of elements in the drawings attached herein may be exaggerated in order to emphasize a clearer description.
FIG. 1 is a view illustrating a position where fracture occurs in a conventional jelly-roll type electrode assembly.
FIG. 2 is a view illustrating a position at which a compressive residual stress is applied to an electrolytic copper foil according to an embodiment of the present invention.
FIG. 3 is a view illustrating a secondary battery according to an embodiment of the present invention.
FIG. 4 is a view illustrating the secondary battery according to the embodiment of the present invention.
FIG. 5 is a contour image of a residual stress showing the measurement result of the surface residual stress of the negative electrode current collector according to Example 1 of the present invention.
FIG. 6 is a contour image of a residual stress showing the measurement result of the surface residual stress of the negative electrode current collector according to Comparative Example 1 of the present invention.
FIG. 7 is a contour image of a residual stress showing the measurement result of the surface residual stress of the negative electrode current collector according to Comparative Example 2 of the present invention.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings commonly understood by those skilled in the art. Also, unless defined clearly and apparently in the description, the terms as defined in a commonly used dictionary are not ideally or excessively construed as having formal meaning.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In the present specification, when a part is referred to "include" an element, the part does not exclude other elements but may further include other elements unless otherwise indicated.

In the present specification, "A and/or B" means A, or B, or A and B.

In the present specification, the expression "%" denotes wt% unless explicitly stated otherwise.

In the present specification, a method for measuring a surface residual stress of a negative electrode current collector may be measured by a method of cosα using µ-X360 equipment manufactured by Pulstec Industrial Co., Ltd.

In the present invention, the MD direction (machine direction) means the length direction of an electrolytic copper foil, and the TD direction (transverse direction) means the width direction of the electrolytic copper foil.

### <Method for Manufacturing Negative Electrode Current Collector>

A method for manufacturing a negative electrode current collector according to the present invention will be described.

The method for manufacturing a negative electrode current collector according to the present invention may include preparing an electrolytic copper foil, and applying a compressive residual stress to a partial region of the surface of the electrolytic copper foil.

In the conventional electrolytic copper foil, a tensile residual stress is formed on the surface due to process characteristics, and the tensile residual stress is a major cause of fatigue failure of the metal. In the case of the conventional electrode assembly wound in one direction, a weak stress is continuously applied to the negative electrode current collector disposed at the outermost of the electrode assembly, that is, the end of the negative electrode current collector disposed on the side of the battery can that accommodates the electrode assembly due to the contraction and expansion of the electrode during the charging and discharging process of the battery, so that the tensile residual stress may be further concentrated. This acts as a factor that increases fatigue failure at the end of the negative electrode current collector disposed at the outermost of the electrode assembly, and there is a limitation in that fracture occurs at a stress much lower than the tensile strength of the negative electrode current collector, thereby deteriorating the lifetime characteristics of the battery.

As a result of repeated studies to solve the above limitations, the present inventors have found that by selectively applying a compressive residual stress to a specific region in the surface of the electrolytic copper foil, the tensile residual stress concentrated on the end of the negative electrode current collector disposed on the outermost of the electrode assembly is offset, thereby suppressing the occurrence of fracture due to fatigue failure and achieving improved lifetime characteristics, thereby completing the present invention.

Hereinafter, each step of the method for manufacturing a negative electrode current collector according to the present invention will be described in more detail.

### (1) Step for Preparing Electrolytic Copper Foil

The method for manufacturing a negative electrode current collector according to the present invention is initiated by a step for preparing an electrolytic copper foil.

In this case, the preparation of the electrolytic copper foil may be made by purchasing and using a commercially available electrolytic copper foil or by an electrolytic plating process known in the art.

For example, the copper foil may be manufactured by an electrolytic plating process. The electrolytic plating process is advantageous in terms of process flexibility and cost because it is easy to adjust the thickness of the plated foil by adjusting the applied current magnitude, current application time, temperature, and the like. In addition, when an electrolytic plating process is used, a thin copper foil may be implemented, thereby improving the energy density of the battery.

For example, a method for manufacturing a copper foil by an electrolytic plating process is as follows. First, a reaction tank including a negative electrode rotating drum and a positive electrode plate disposed to face the negative electrode rotating drum is prepared, and an electrolyte solution in which copper ions and water are mixed is filled in the reaction tank. Next, copper is electrodeposited on the surface of the negative electrode rotating drum by rotating the negative electrode rotating drum in the state in which electricity is applied to the negative electrode rotating drum and the positive electrode plate. Finally, the electrodeposited copper is continuously withdrawn from the reaction tank to finally manufacture the copper foil.

### (2) Step for Applying Compressive Residual Stress to Specific Region in Surface of Electrolytic Copper Foil

Next, a compressive residual stress is applied to a specific region in the surface of the prepared electrolytic copper foil.

FIG. 2 is a view illustrating a position at which a compressive residual stress is applied to an electrolytic copper foil according to an embodiment of the present invention.

As shown in FIG. 2, the region to which the compressive residual stress is applied is both ends A of the electrolytic copper foil 15 in the MD direction. Specifically, it may be a region that forms the ends of the negative electrode current collector after cutting the electrolytic copper foil 15.

The ends A of the negative electrode current collector may be disposed at the outermost of the electrode assembly, and by applying a compressive residual stress to the ends A of the negative electrode current collector to reduce a tensile residual stress, it is possible to suppress the occurrence of fracture due to fatigue failure.

A compressive residual stress may be applied to a partial region in the surface of the prepared electrolytic copper foil through sand blast. When the compressive residual stress is applied through the sand blast, the surface damage of the electrolytic copper foil is minimized, thereby suppressing the occurrence of fracture due to fatigue failure.

The fine particles may be particles having a size of 30 µm or less, specifically 5 µm to 25 µm, and more specifically 10 µm to 20 µm. In the present invention, when the fine particles satisfy the size of the range, a compressive residual stress may be selectively applied to only the partial region without damage to the surface of the electrolytic copper foil.

The particles may include at least one among Al₂O₃, melamine, and amino aldehyde, but are not limited thereto.

During the sand blast, the blasting distance, air pressure, and nozzle transfer speed may vary with the type and physical properties of the electrolytic copper foil used.

For example, the sand blast may have a blasting distance of 20 mm to 100 mm, specifically 20 mm to 50 mm, and more specifically 20 mm to 30 mm.

For example, the sand blast may have an air pressure of 0.10 MPa to 0.30 MPa, specifically 0.10 MPa to 0.20 MPa, and more specifically 0.10 MPa to 0.15 MPa.

For example, the sand blast may have a nozzle transfer speed of 5 M/s to 10 M/s, specifically 5 M/s to 8 M/s, and more specifically 5 M/s to 6 M/s. In the present invention, when the blasting distance, the air pressure, and/or the nozzle transfer speed satisfy the above range, the compressive residual stress may be selectively applied to only the partial region without damage to the surface of the electrolytic copper foil.

As shown in FIG. 2, the tension of the prepared electrolytic copper foil 15 may be controlled by a transfer roll 25. In the present invention, as the tension of the electrolytic copper foil 15 is controlled by the transfer roll 25, the compressive residual stress may be selectively applied only to the partial region without damage to the surface of the electrolytic copper foil 15.

The partial region of the electrolytic copper foil may be plastically deformed by the sand blast. As a result, a portion in which the compressive residual stress is formed and a portion in which the tensile residual stress is formed may be formed on the surface of the electrolytic copper foil.

### <Negative Electrode Current Collector>

The negative electrode current collector according to the present invention includes an electrolytic copper foil having plastic deformation layers formed at both ends thereof in the MD direction, and the average residual stress may be 0 MPa or less, specifically -30 MPa to 0 MPa, and more specifically -25 MPa to -10 MPa when the surface residual stress is measured. When the average residual stress satisfies the above range, it is possible to suppress the occurrence of fracture due to fatigue failure at the ends of the negative electrode current collector.

When the surface residual stress is measured, the area in which the compressive residual stress is formed may be 70.0% to 99.5%, specifically 90% to 99.5%, and more specifically 95.0% to 99.5% of the total measured area. The area in which the tensile residual stress is formed may be 0.5% to 10.0%, specifically 2.0% to 8.0%, and more specifically 2.0% to 7.0% of the total measured area.

When the ratio of the area in which the compressive residual stress is formed is less than 70.0%, processing curing may occur during the sand blast process, and thus wrinkles may occur due to a difference in physical properties between the uncoated portion and the coated portion, and when the ratio of the area in which the compressive residual stress is formed is greater than 99.5%, the area in which the compressive residual stress is formed becomes excessively large, thereby causing the current collector to be disconnected and destroyed. When the ratio of the area in which the tensile residual stress is formed satisfies the above range, fatigue failure may be improved by lowering the strength of the stress field formed around the fine cracks on the surface of the negative electrode current collector.

The plastic deformation layer may have a compressive residual stress. In order to change the residual stress on the surface of the negative electrode current collector, there is little plastic deformation inside the negative electrode current collector, and only the outer surface of the negative electrode current collector should be subjected to plastic deformation.

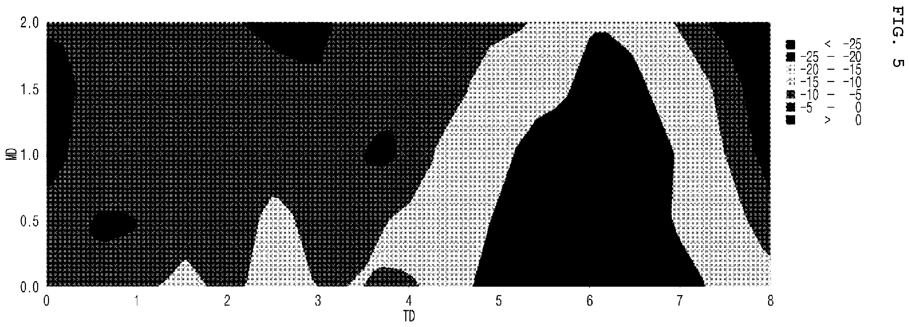

A portion in which the compressive residual stress is formed on the surface of the negative electrode current collector according to the present invention and a portion in which the tensile residual stress is formed may be mixed. For example, FIG. 5 is a contour image of a residual stress showing the measurement result of the surface residual stress of the negative electrode current collector according to Example 1 of the present invention. As shown in FIG. 5, the negative electrode current collector may include a portion in which the compressive residual stress is formed (shown in blue) and a portion in which the tensile residual stress is formed (shown in red). In this case, the portion in which the compressive residual stress is formed and the portion in which the tensile residual stress is formed may be separated into one or more regions and may be scattered on the surface of the negative electrode current collector. As a result, the tensile residual stress concentrated on the ends of the negative electrode current collector disposed at the outermost of the electrode current collector is offset due to the contraction and expansion of the electrode during the charging and discharging process of the battery, thereby suppressing the occurrence of fracture due to fatigue failure and achieving improved lifetime characteristics.

The negative electrode current collector according to the present invention may have conductivity without causing adverse chemical changes in the battery, and thus may be used as a negative electrode current collector. In addition, since the negative electrode current collector according to the present invention may be manufactured by electrolytic plating, manufacturing costs may be relatively reduced.

The negative electrode current collector according to the present invention may have a thickness of 3 µm to 500 µm, specifically 5 µm to 100 µm, and more specifically 6 µm to 12 µm. When the thickness of the negative electrode current collector satisfies the above range, the durability of the battery manufactured from the negative electrode current collector of the present invention may be improved.

### <Negative Electrode>

The negative electrode according to the present invention may include the negative electrode current collector and a negative electrode active material layer formed on one surface or both surfaces of the negative electrode current collector.

The negative electrode according to the present invention may include a coated portion in which the negative electrode active material layer is formed and an uncoated portion in which the negative electrode active material layer is not formed.

The negative electrode active material layer may include a negative electrode active material, and may further include a conductive agent, a binder, and the like as necessary.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may include graphite such as irregular, planar, flaky, spherical, or fibrous natural graphite or artificial graphite, and examples of the amorphous carbon may include soft carbon (low-temperature sintered carbon) or hard carbon, mesophase pitch carbide, sintered cokes, or the like.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe' _{y}O_{z} (Me: Mn, Fe, Pb, Ge; Me': Al, B, P, Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group XIII element, a Group XIV element, transition metal, a rare earth element, and a combination thereof, and is not Si), Sn, SnO₂, and Sn-Y (where Y is an element selected from the group consisting of alkali metal, alkaline earth metal, a Group XIII element, a Group XIV element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

The positive electrode active material may be included in an amount of 60 wt% to 99 wt%, preferably 70 wt% to 99 wt%, and more preferably 80 wt% to 98 wt% with respect to the total weight of the positive electrode active material layer.

The negative electrode conductive agent is a component for further improving the conductivity of the negative electrode active material, and the conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The negative electrode conductive agent may be included in an amount of 1 wt% to 20 wt%, preferably 1 wt% to 15 wt%, and more preferably 1 wt% to 10 wt% with respect to the total weight of the negative electrode active material layer.

The negative electrode binder is a component that assists in the binding among the negative electrode conductive agent, the negative electrode active material, and the negative electrode current collector. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, polyethylene, polypropylene, an ethylene-propylene-diene monomer, a sulfonated ethylene-propylene-diene monomer, a styrene-butadiene rubber, a fluoro rubber, and various copolymers thereof.

Typically, the negative electrode binder may be included in an amount of 1 wt% to 20 wt%, preferably 1 wt% to 15 wt%, and more preferably 1 wt% to 10 wt% with respect to the total weight of the negative electrode active material layer.

### <Electrode Assembly>

The present invention provides an electrode assembly including the negative electrode.

The plastic deformation layer may include the end of the negative electrode current collector disposed at the outermost of the electrode assembly according to the present invention.

The electrode assembly provides an electrode assembly in which the negative electrode, a positive electrode, and a separator interposed between the negative electrode and the positive electrode are wound in one direction. Since the negative electrode has been described above, only the other components except for the negative electrode will be described below.

### (Positive Electrode)

The positive electrode may include a positive electrode current collector, and a positive electrode active material layer disposed on the positive electrode current collector.

The positive electrode current collector is not particularly limited so long as it has conductivity without causing adverse chemical changes in the battery. For example, stainless steel, aluminum, nickel, titanium, sintered carbon, aluminum or stainless steel that is surface-treated with one of carbon, nickel, titanium, silver, or the like may be used as the positive electrode current collector.

The positive electrode current collector may have a thickness of 3 µm to 500 µm, and microscopic irregularities may be formed on the surface of the positive electrode current collector to improve the adhesion to the positive electrode a ctive material layer. For example, the positive electrode current collector may be used in various shapes such as a film, a sheet, a foil, a net, a porous body, a foam body, and a non-woven fabric body.

The positive electrode active material layer may include a positive electrode active material, and may further include a conductive agent, a binder, and the like as necessary.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium metal oxide may include a lithium-manganese-based oxide (*e.g*., LiMnO₂, LiMn₂O₄, *etc*.), a lithium-cobalt-based oxide (*e.g*., LiCoO₂, etc.), a lithium-nickel-based oxide (*e.g*., LiNiO₂, *etc.*)*,* a lithium-nickel-manganese-based oxide (*e.g*., LiNi_{1-Y}Mn_{Y}O₂ (where 0<Y<1), LiMn_{2-z}Ni_{z}O₄ (where 0<Z<2), *etc*.), a lithium-nickel-cobalt-based oxide (*e.g*., LiNi_{1-Y1}Co_{Y1}O₂ (where 0<Y1<1), *etc*.), a lithium-manganese-cobalt-based oxide (*e.g*., LiCo_{1-Y2}Mn_{Y2}O₂ (where 0<Y2<1), LiMn_{2-z1}Co_{z1}O₄ (where 0<Z1<2), *etc.*)*,* a lithium-nickel-manganese-cobalt-based oxide (*e.g.,* Li (NiₚCo_{q}Mnᵣ) O₂ (where 0<p<1, 0<q<1, 0< r<1, and p+q+r=1) or Li(Niₚ₁Co_{q1}Mnᵣ₁)O₄ (where 0<p1<2, 0<q1<2, 0<r1<2, and p1+q1+r1=2), etc.), a lithium-nickel-cobalt-transition metal (M) oxide (*e.g.,* Li(Niₚ₂Co_{q2}Mnᵣ₂Mₛ₂)O₂ (where M is selected from the group consisting of Al, Fe, V, Cr, Ti, Ta, Mg, and Mo, and p2, q2, r2, and s2 are atomic fractions of each independent elements, wherein 0<p2<1, 0<q2<1, 0<r2<1, 0<S2<1, and p2+q2+r2+S2=1), *etc*.), or a lithium-iron phosphate (*e.g*., Li₁₊ₐFe₁₋ₓMₓ(PO_{4-b})X_{b} (where, M is at least one selected from among Al, Mg, and Ti, X is at least one selected from among F, S, and N, -0.5≤a≤0.5, 0≤x≤0.5, and 0≤b≤0.1), etc.), and any one thereof or a mixtur e of two or more thereof may be included.

Among these materials, in terms of the improvement of capacity characteristics and stability of the battery, the lithium metal oxide may include LiCoO₂, LiMnO₂, LiNiO₂, a lithium nickel manganese cobalt oxide (*e.g.,* Li(Ni_{1/3}Mn_{1/3}Co_{1/3})O₂, Li(Ni_{0.6}Mn_{0.2}CO_{0.2})O₂, Li(Ni_{0.5}Mn_{0.3}Co_{0.2})O₂, Li(Ni_{0.7}Mn_{0.15}Co_{0.15})O₂, Li(Ni_{0.8}M_{0.1}Co_{0.1})O₂, *etc*.), a lithium nickel cobalt aluminum oxide (*e.g.,* Li(Ni_{0.8}Co_{0.15}Al_{0.05})O₂, *etc*.) , a lithium nickel manganese cobalt aluminum oxide (*e.g*., Li(Ni_{0.86}Co_{0.05}Mn_{0.07}Al_{0.02})O₂), a lithium iron phosphate (*e.g.,* LiFePO₄), or the like, and any one thereof or a mixture of two or more thereof may be used.

The positive electrode active material may be included in an amount of 60 wt% to 99 wt%, preferably 70 wt% to 99 wt%, and more preferably 80 wt% to 98 wt% with respect to the total weight of the positive electrode active material layer.

The positive electrode conductive agent is a component for further improving the conductivity of the positive electrode active material, and the conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

Typically, the positive electrode conductive agent may be included in an amount of 1 wt% to 20 wt%, preferably 1 wt% to 15 wt%, and more preferably 1 wt% to 10 wt% with respect to the total weight of the positive electrode active material layer.

The positive electrode binder is a component that assists in the binding between the active material and the conductive agent and in the binding with the current collector.

Examples of the binder may include polyvinylidene fluoride, polyvinyl alcohol, carboxymethylcellulose (CMC), starch, hydroxypropylcellulose, regenerated cellulose, polyvinylpyrrolidone, polyethylene (PE), polypropylene, an ethylene-propylene-diene monomer, a sulfonated ethylene-propylene-diene monomer, a styrene-butadiene rubber, a fluoro rubber, various copolymers, and the like.

Typically, the positive electrode binder may be included in an amount of 1 wt% to 20 wt%, preferably 1 wt% to 15 wt%, and more preferably 1 wt% to 10 wt% with respect to the total weight of the positive electrode active material layer.

### (Separator)

Meanwhile, the separator may be disposed between the negative electrode and the positive electrode. The separator may be used without particular limitation as long as it is generally used as a separator in a lithium secondary battery, and particularly, it is preferable that the separator has high moisture-retention ability for an electrolyte solution as well as low resistance to the transfer of electrolyte ions.

As the separator, for example, a porous polymer including a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. Also, a typical porous non-woven fabric, for example, a non-woven fabric formed of high melting point glass fibers or polyethylene terephthalate fibers may be used as the separator.

### <Secondary Battery>

The present invention provides a secondary battery including the electrode assembly.

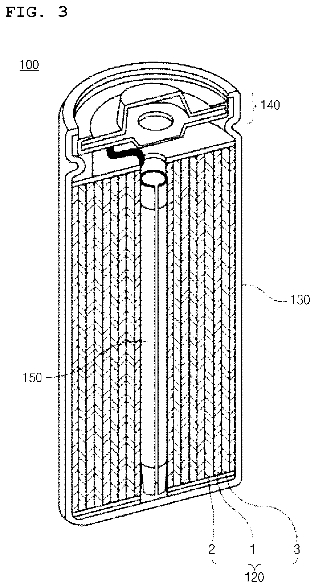

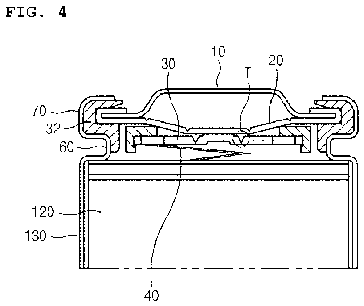

FIGS. 3 and 4 are each views illustrating a secondary battery according to an embodiment of the present invention. The secondary battery may include the electrode assembly 120, a battery can 130 that accommodates the electrode assembly, and a cap assembly 140 that seals an upper opening of the battery can. Since the electrode assembly has been described above, only the other components except for the electrode assembly will be described below.

### (Electrolyte)

The secondary battery according to the present invention may include an electrolyte. In this case, the electrolyte may be a non-aqueous electrolyte. The non-aqueous electrolyte may include an organic solvent and a lithium salt commonly used in the art, and is not particularly limited.

Any organic solvent may be used as the organic solvent without particular limitation so long as it may function as a medium through which ions involved in an electrochemical reaction of the battery may move. Specifically, as the organic solvent, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethylcarbonate (DMC), diethylcarbonate (DEC), methylethylcarbonate (MEC), ethylmethylcarbonate (EMC), ethylene carbonate (EC), or propylene carbonate (PC) may be used.

Among these solvents, the carbonate-based solvent is preferable, and, for example, a mixture of a cyclic carbonate (*e.g*., ethylene carbonate or propylene carbonate) having high ionic conductivity and high dielectric constant, which may increase charge/discharge performance of the battery, and a low-viscosity linear carbonate-based compound (*e.g*., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt is preferably included in the electrolyte at a concentration of about 0.6 mol% to about 2 mol%.

Meanwhile, the non-aqueous electrolyte according to the present invention may further include additives in order to further improve physical properties of the secondary battery, although the additives are not essential.

Examples of the additives may include at least one selected from the group consisting of a cyclic carbonate-based compound, a halogen-substituted carbonate-based compound, a nitrile-based compound, a sultone-based compound, a sulfate-based compound, a phosphate-based compound, a borate-based compound, a benzene-based compound, an amine-based compound, a silane-based compound, and a lithium salt-based compound.

The cyclic carbonate-based compound may be, for example, vinylene carbonate (VC) or vinyl ethylene carbonate (VEC).

The halogen-substituted carbonate-based compound may be, for example, fluoroethylene carbonate (FEC) or the like.

The nitrile-based compound may be, for example, succinonitrile, adiponitrile, hexantricyanide, 1,4-dicyano-2-butene, or the like.

The sultone-based compound may be, for example, 1,3-propane sultone, 1,3-propene sultone, or the like.

The sulfate-based compound may be, for example, ethylene sulfate (Esa), trimethylene sulfate (TMS), methyl trimethylene sulfate (MTMS), or the like.

The phosphate-based compound, for example, may include at least one compound selected from the group consisting of lithium difluoro bis(oxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite.

The borate-based compound may be, for example, tetraphenylborate, lithium oxalyl difluoroborate (LiODFB), or the like.

The benzene-based compound may be, for example, fluorobenzene, the amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may include at least one compound selected from the group consisting of LiPO₂F₂, LiODFB, LiBOB (lithium bis(oxalato)borate (LiB(C₂O₄)₂), and LiBF₄.

Meanwhile, the additives may be used alone, or in admixture with two or more thereof.

The total amount of the additive may be 1 wt% to 20 wt%, and preferably 1 wt% to 15 wt% with respect to the total weight of the electrolyte solution. When the additive is included within the above range, a film may be stably formed on the electrode and ignition phenomenon may be suppressed when the battery is overcharged, and side reactions may be prevented from occurring during the initial activation process of the secondary battery, or the additive may be prevented from remaining or being precipitated.

### (Battery Can)

The battery can 130 is a container for accommodating the electrode assembly 120 and the electrolyte, and has an opening formed at an upper end thereof, and is made of a metal material having conductivity such as aluminum or steel. The battery can 130 accommodates the electrode assembly 120 and the electrolyte in the inner space through the upper opening.

If necessary, the battery can 130 may include a beading part 60 and a crimping part 70. The beading part 60 may be formed by press-fitting the circumference of the outer circumferential surface of the battery can 130. The beading part 60 prevents the electrode assembly 120 accommodated inside the battery can 130 from escaping through the upper opening of the battery can 130, and may function as a support on which the cap assembly 140 is seated.

The crimping part 70 may be formed on the upper portion of the beading part 60, and has a shape extending and bent to surround the outer circumferential surface and a portion of the upper surface of the cap assembly 140 disposed on the beading part 60.

### (Cap Assembly)

Next, the cap assembly 140 is for sealing the upper opening of the battery can, and as shown in FIG. 4, includes a top cap 10, a safety vent 20, and a CID filter 30.

The top cap 10 has a positive electrode terminal in a protruding shape, an exhaust port (not shown) is perforated, and the safety vent 20 is positioned below the top cap 10. A portion of the upper surface of the CID filter 30 is coupled to the safety vent 20, and a portion of the lower surface thereof is connected to the electrode of the electrode assembly 120. When the internal pressure increases by gas generated from the electrode assembly 120 due to overcharge, high temperature, or the like, the shape of the safety vent 20 is reversed and protrudes upward to exhaust the gas. In this case, the CID filter 30 may also move upward together, and the notch part T region may be broken to block the flow of current. Accordingly, additional overcharge and battery explosion may be prevented.

In addition, the cap assembly 140 may include a gasket 32 that provides airtightness between the top cap 10 and the battery can 130 and has insulation. The top cap 10 may be pressed onto the beading part 60 formed in the battery can 130 and fixed by the crimping part 70. The top cap 10 is a component made of a metal material having conductivity, and covers the upper opening of the battery can 130. The top cap 10 is electrically connected to the positive electrode of the electrode assembly 120, and is electrically insulated from the battery can 130 through the gasket 32. Therefore, the top cap 10 may function as a positive electrode terminal of the secondary battery. The top cap 10 may include a protrusion protruding upward in the center thereof, and the protrusion may be brought into contact with an external power source to allow a current to be applied from the external power source.

Hereinafter, the present invention will be described in more detail through a specific example. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Example 1

A reaction tank including a negative electrode rotating drum and a positive electrode plate disposed to face the negative electrode rotating drum was prepared, and an electrolyte solution in which copper sulfate and water were mixed was filled in the reaction tank. Next, copper was electrodeposited on the surface of the negative electrode rotating drum by rotating the negative electrode rotating drum in the state in which an electrical power is applied to the negative electrode rotating drum and the positive electrode plate. Then, the electrodeposited copper was continuously withdrawn from the reaction tank to obtain an 8-µm thick electrolytic copper foil.

The obtained electrolytic copper foil was polished in a sand blast manner under the conditions of a blasting distance of 20 mm, a transfer rate of 10 M/s, and an air pressure of 0.10 MPa, by using Al₂O₃ having a size of 30 µm as an abrasive. The position of the polishing process is the A region in FIG. 2.

After the polishing process, the electrolytic copper foil was slit and sheeted to manufacture a negative electrode current collector.

### Comparative Example 1

A negative electrode current collector was manufactured in the same manner as in Example 1, except that the obtained electrolytic copper foil was not polished.

### Comparative Example 2

A negative electrode current collector was manufactured in the same manner as in Example 1, except that the entire surface of the obtained electrolytic copper foil was polished by a grinder method using 10-µm silicon carbide as an abrasive with a sand paper.

### Experimental Example 1 - Measurement of Residual Stress on Surface of Negative Electrode Current Collector

A residual stress on the surface of the negative electrode current collector prepared in each of Example 1 and Comparative Examples 1 and 2 was measured. Specifically, the residual stress on the surface of the negative electrode current collector was measured by a method of cosα using µ-X360 equipment manufactured by Pulstec Industrial Co., Ltd. The measurement results are shown in Table 1 below and FIGS. 5 to 7.

The average residual stress in Table 1 was measured at 0.2-mm intervals, and the average residual stress was calculated by dividing the measured value by the total variable.

FIG. 5 is a contour image of residual stress showing the residual stress formed on the surface of the negative electrode current collector manufactured according to Example 1 of the present invention.

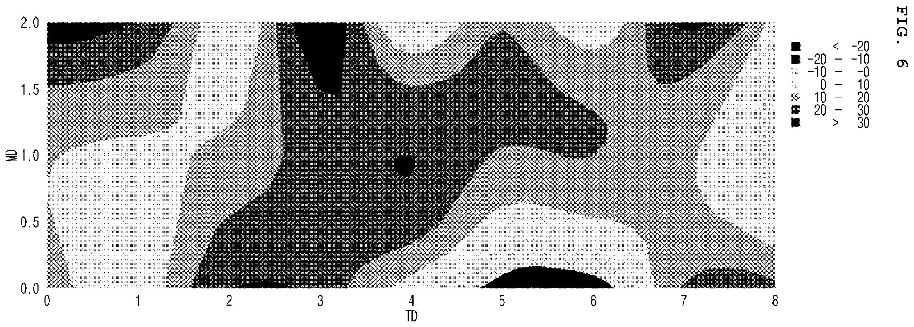

FIG. 6 is a contour image of residual stress showing the residual stress formed on the surface of the negative electrode current collector manufactured according to Comparative Example 1 of the present invention.

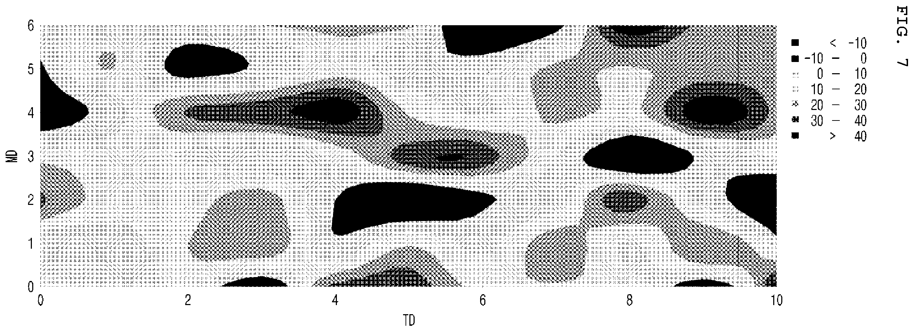

FIG. 7 is a contour image of residual stress showing the residual stress formed on the surface of the negative electrode current collector manufactured according to Comparative Example 2 of the present invention.

As shown in FIGS. 5 to 7, the negative electrode current collector may include a portion in which a compressive residual stress is formed (shown in blue) and a portion in which a tensile residual stress is formed (shown in red).

**[Table 1]**

| | Residual stress ratio (%) | | Average residual stress (MPa) |
|---|---|---|---|
| | Tensile residual stress | Compressive residual stress | |
| Example 1 | 3.0 | 97.0 | -11.0 |
| Comparative Example 1 | 95.0 | 5.0 | +16.0 |
| Comparative Example 2 | 91.5 | 8.5 | +14.7 |

As shown in Table 1, it may be confirmed that Example 1 in which the surface of the electrolytic copper foil was subjected to the sand blast has the average residual stress lower than Comparative Example 1 in which the surface of the electrolytic copper foil was not subjected to polishing and Comparative Example 2 in which the surface of the electrolytic copper foil was polished by the grinder method. From this, when the secondary battery manufactured from the negative electrode current collector including the electrolytic copper foil of Example 1 is driven, it may be inferred that no cracks occur at the end of the negative electrode current collector.

## Claims

1. A method for manufacturing a negative electrode current collector, the method comprising the steps of:
(A) preparing an electrolytic copper foil; and
(B) applying a compressive residual stress to both ends of the electrolytic copper foil in the MD direction.

2. The method of claim 1, wherein step (B) is performed through sand blast.

3. The method of claim 2, wherein the sand blast is performed by blasting particles having a particle diameter of 30 µm or less.

4. The method of claim 3, wherein the particles comprise at least one among Al₂O₃, melamine, and amino aldehyde.

5. The method of claim 3, wherein the sand blast has a blasting distance of 20 mm to 100 mm.

6. The method of claim 3, wherein the sand blast has an air pressure of 0.10 MPa to 0.30 MPa.

7. The method of claim 3, wherein the sand blast has a nozzle transfer speed of 5 M/s to 10 M/s.

8. The method of claim 1, wherein in step (B), the tension of the electrolytic copper foil is controlled by a transfer roll.

9. A negative electrode current collector comprising an electrolytic copper foil having plastic deformation layers formed at both ends thereof in the MD direction, and having an average residual stress of 0 MPa or less when a surface residual stress is measured.

10. The negative electrode current collector of claim 9, wherein when the surface residual stress of the negative electrode current collector is measured, the area in which a compressive residual stress is formed is 70.0% to 99.5% of the total measured area.

11. The negative electrode current collector of claim 9, wherein when the surface residual stress of the negative electrode current collector is measured, the area in which a tensile residual stress is formed is 0.5% to 10.0% of the total measured area.

12. The negative electrode current collector of claim 9, wherein the plastic deformation layer has a compressive residual stress.

13. A negative electrode comprising the negative electrode current collector of any one of claims 9 to 12.

14. An electrode assembly in which the negative electrode according to claim 13, a positive electrode, and a separator interposed between the negative electrode and the positive electrode are wound in one direction.

15. The electrode assembly of claim 14, wherein the plastic deformation layer comprises the end of the negative electrode current collector disposed at the outermost of the electrode assembly.

16. A secondary battery comprising:
the electrode assembly according to claim 14;
a battery can configured to accommodate the electrode assembly; and
a cap assembly configured to seal an upper opening of the battery can.
